# EUROPÄISCHE PATENTSCHRIFT

(11) **EP 1 095 923 B1**
(45) Veröffentlichungstag und Bekanntmachung des Hinweises auf die Patenterteilung: **22.12.2004**
(21) Anmeldenummer: 00122653.9
(22) Anmeldetag: 18.10.2000
(51) Int. Cl.: C04B 41/46, C04B 41/52, B28B 11/08

(54) **Verfahren zur Erzeugung einer Selbstreinigungseigenschaft von keramischen Oberflächen**
Method for obtaining self-cleaning ceramic surfaces
Procédé d'obtention de surfaces céramiques auto-nettoyantes

(30) Priorität: 29.10.1999 DE 19952188; 03.12.1999 DE 19958321
(43) Veröffentlichungstag der Anmeldung: 02.05.2001
(73) Patentinhaber: ERLUS BAUSTOFFWERKE AG, 84088 Neufahrn (DE)
(72) Erfinder: Dendl, Peter, Dr. rer.nat., 93049 Regensburg (DE); Interwies, Jan, Dipl.-Ing., 84034 Landshut (DE)
(74) Vertreter: LOUIS- PÖHLAU- LOHRENTZ

(56) Entgegenhaltungen:
- EP-A- 0 909 747
- FR-A- 2 314 157
- US-A- 5 550 184

## Beschreibung

Die Erfindung betrifft Verfahren zur Erzeugung einer Selbstreinigungseigenschaft von keramischen Oberflächen durch Ausbildung einer Struktur von hydrophoben Erhebungen vorbestimmter Höhe und Verteilungsdichte auf solchen Oberflächen.

Es ist grundsätzlich bekannt, eine Selbstreinigungseigenschaft von Oberflächen entweder durch Schaffung entsprechender Oberflächenstrukturen bereits bei der Herstellung der Oberflächen aus hydrophoben Polymeren oder durch Aufbringen eines Pulvers aus hydrophoben Polymeren oder hydrophobierten Materialien auf der Oberfläche zu erzeugen (WO 96/04123). Bei einem bekannten Verfahren der eingangs angegebenen Art (EP-A 909 747) wird eine keramische Oberfläche mit einer Dispersion von Pulverpartikeln aus inertem Material in einer hydrophobierenden Siloxanlösung benetzt und das Siloxan ausgehärtet. Als Pulver kommt hierbei insbesondere ein Pulver aus gemahlener Keramik in Betracht, z.B. Ton. Die angestrebte Verteilungsdichte (der jeweilige Abstand zwischen den durch die Partikel erzeugten Erhebungen auf der Oberfläche) kann durch die Dispersionsdichte des Pulvers in der Siloxan-Lösung gesteuert werden, wobei mit zunehmender Dispersionsdichte auch die Verteilungsdichte der Erhebungen auf der Oberfläche gesteigert wird. Als Siloxan-Lösung werden Polysilocxane herangezogen, die üblicherweise zum Hydrophobieren (Imprägnieren) von keramischen Oberflächen, z.B. von Dachziegeln, bekannt sind. Die Aushärtung dieser Siloxane erfolgt durch Trocknen.

Die Pulverpartikel werden bei diesem bekannten Verfahren durch die Polysiloxane auf der Oberfläche mechanisch befestigt und zugleich hydrophobiert. Es hat sich jedoch gezeigt, daß die Haftfestigkeit der Siloxanbindung im Laufe der Benutzungsdauer der entsprechenden Keramikkörper abnimmt und die Partikel sich von der Oberfläche bei mechanischer Beanspruchung lösen. Damit geht die Selbstreinigungseigenschaft der Oberflächen mehr und mehr verloren.

Aufgabe der Erfindung ist es daher, einfache Verfahren zur Ausbildung einer Struktur der eingangs genannten Art auf einer keramischen Oberfläche vorzuschlagen, die eine dauerhaft bleibende Struktur der Oberfläche ergeben. Ferner ist es Aufgabe der Erfindung, einen entsprechend strukturierten keramischen Körper mit selbstreinigender Oberfläche zu schaffen.

Erfindungsgemäß wird dies wahlweise oder kombiniert durch das Verfahren gemäß einem der Patentansprüche 1, 9, 13 und 19 sowie mit einem keramischen Körper gemäß Anspruch 28 erreicht. Gemeinsam ist diesen Verfahren eine Beeinflussung oder Behandlung der Fertigungshaut der Oberfläche vor dem oder durch das Brennen bzw. Aushärten des die Oberfläche aufweisenden Körpers derart, daß die angestrebte Struktur von Erhebungen durch die Oberfläche unmittelbar, d. h. durch das Keramikmaterial der Oberfläche selbst gebildet wird.

### Verfahren gemäß Patentanspruch 1

Bei diesem Verfahren dient das Pulver aus einem bei der Brenntemperatur des Keramikkörpers beständigen Material, das vor dem Brand des aus silikathaltigem Material bestehenden Keramikkörpers auf dessen Oberfläche aufgetragen wird, im Unterschied zu dem vorstehend geschilderten bekannten Verfahren nicht dazu, selbst die die Struktur ausmachenden Erhebungen auf der Oberfläche zu bilden. Vielmehr wirkt das Pulver als Mittel dazu, bei dem Brennvorgang ein strukturbildendes Verhalten der keramischen Oberfläche hervorzurufen, und geht keine Bindung mit dieser ein. Es wird nach dem Brennen vollständig oder weitgehend von der so erzeugten keramischen Oberfläche wieder entfernt. Dem Brennvorgang schließt sich dann eine Hydrophobierung der keramischen Oberfläche an, die für die Selbstreinigungseigenschaft der die Struktur aufweisenden Oberfläche wesentlich ist.

Das durch das Pulver induzierte strukturbildende Verhalten der keramischen Oberfläche während des Brennvorgangs hängt von der Art des Pulvermaterials ab. So hat sich gezeigt, daß durch die Wahl eines Pulvermaterials mit ausgeprägter oder sogar starker Affinität zu der bei dem Brennvorgang auf der keramischen Oberfläche auftretenden Glasphase (SiO₂) die oberflächliche Glasphase durch das Pulvermaterial aufgenommen und in dem entsprechenden Ausmaß von der keramischen Oberfläche zusammen mit dem Pulver nachträglich entfernt wird. Eine Bindung des Pulvers an die keramische Oberfläche durch die Glasphase findet in diesem Fall nicht statt. Dieser Vorgang läßt sich so weitgehend ausnutzen, daß nach dem Entfernen des Pulvers von der gebrannten keramischen Oberfläche die üblicherweise bei tonmineralhaltigen Rohstoffen auftretende oberflächliche Glasphase vollkommen entfernt wird und die verbleibende, durch die Minerale gebildete Keramikstruktur unmittelbar die angestrebte Struktur bildet. Dabei hat sich überraschend gezeigt, daß diese Struktur ohne jegliche weitere Einwirkung darauf die Höhen der Erhebungen und Verteilungsdichte davon aufweist, die für das Eintreten der Selbstreinigungsfähigkeit Voraussetzung sind. Grundsätzlich sind hierfür Erhebungshöhen zwischen 1 µm und 1000 µm sowie eine Verteilungsdichte von 0 bis 500 µm erforderlich; die durch das beschriebene Erfahren erzielbare Struktur hat sich als verhältnismäßig fein mit Höhen der Erhebungen von 5 bis 400 µm mit einer gleichmäßigen Verteilungsdichte von 5 bis 400 µm erwiesen.

Erzielt wird dieser Effekt der vollständigen Beseitigung der oberflächlichen Glasphase dann, wenn das Pulvermaterial in trockener oder vorzugsweise in aufgeschlämmter und dadurch gebundener Form und vorzugsweise in einer Schichtdicke auf die zu brennende Oberfläche aufgetragen wird, die ein Mehrfaches der Partikelgröße beträgt. Besonders geeignete Pulvermaterialien sind Al₂O₃ oder Al(OH)₃ und hoch tonerdehaltige Tone oder Mischungen aus diesen.

Das Verfahren läßt sich auch mit einem Pulvermaterial von weniger ausgeprägter Affinität ausführen. Bei der Auswahl eines Pulvermaterials, das mit der zu brennenden keramischen Oberfläche keine oder nur eine geringe Bindung eingeht und ebenfalls eine merkliche Affinität zu der Glasphase hat, "wächst" die Glasphase der Oberfläche im Verlauf der bei Brenntemperatur auftretenden Erweichung, möglicherweise auch nach Art eines Kapillareffekts, zwischen die Teilchen des Pulvers ein und erstarrt nach dem Abkühlen in diesem Zustand. Die Glasphase wird hierbei nicht völlig entfernt und nach dem Entfernen der Pulverteilchen, das durch Reiben, Wischen, Bürsten und/oder Auswaschen erfolgen kann, bleibt die teils durch die Glasphase, teils durch die Minerale gebildete Struktur der Oberfläche erhalten. Die Strukturerhebungen sind auch damit ein integraler Bestandteil der Oberfläche selbst.

Als geeignetes inertes Pulvermaterial hat sich auch hierbei ein solches erwiesen, dessen Sinter- bzw. Erweichungstemperatur erheblich über der Brenntemperatur des Keramikkörpers liegt, z.B. Al₂O₃- oder Al(OH)₃-Pulver, das in geringerer Verteilungsdichte als im vorigen Fall aufgebracht wird.

Inerte Pulver aus diesem Material, aber auch Klinker- oder SiC-Pulver können in Wasser, vorzugsweise aber in viskoseren Mitteln als Trägerflüssigkeit dispergiert und mit herkömmlichen Techniken auf die zu behandelnde keramische Oberfläche aufgebracht werden, z.B. durch Schütten, Tauchen, Sprühen oder Schleudern oder in einem elektrostatischen Auftragverfahren. Es ist auch denkbar, die Dispersion auf der keramischen Oberfläche unmittelbar dadurch zu erzeugen, daß zunächst die Trägerflüssigkeit auf die keramische Oberfläche aufgebracht und anschließend das Pulver in die Flüssigkeitschicht eingestreut wird. Die Trägerflüssigkeit hat im Rahmen des erfindungsgemäßen Verfahrens nur die Aufgabe, das inerte Pulvermaterial bis zum Brennvorgang und während des Brennvorgangs auf der Oberfläche zu halten. Zweckmäßigerweise sollte daher die Trägerflüssigkeit eine gewisse Viskosität haben; Carboxyl-Methyl-Cellulose (CMC) hat sich hierfür als geeignet erwiesen. Die Vermengung oder Vermischung des Pulvermaterials mit der Trägerflüssigkeit kann auch in der Weise ausgeführt werden, daß Trägerflüssigkeit und Pulvermaterial zunächst getrennt voneinander einer Sprühdüse zugeführt werden und das Pulvermaterial durch den Sprühvorgang selbst mit der Trägerflüssigkeit benetzt wird, so daß es bei dem Auftreffen auf die noch zu brennende keramische Oberfläche davon gehalten wird.

Es hat sich gezeigt, daß die angestrebte Struktur der keramischen Oberfläche insbesondere dann mit gleichmäßiger Höhe und Verteilungsdichte vorherbestimmt werden kann, wenn die Fertigungshaut der Oberfläche vor dem Auftragen des Pulvermaterials verhältnismäßig glatt ist. Beim Brand füllt die Glasphase bei tonmineralhaltiger Keramik die "Täler" in der Struktur der Mineralerhebungen völlig aus. Daher kann daran gedacht werden, die Oberfläche von Keramikkörpern, deren Formvorgang, z. B. wegen geringen Preßdrucks oder im Strangpreßverfahren, eine gewisse Rauhigkeit der Oberfläche ergibt, zu glätten. Das ist dann nicht erforderlich, wenn die zu behandelnde Oberfläche unter Anwendung einer Form ausgebildet wird, die von vornherein eine glatte Oberfläche entstehen lässt. Dies gilt beispielsweise für Oberflächen, die im Wege des isostatischen Pressverfahrens hergestellt werden. Hierbei entspricht die Rauhigkeit der an dem metallischen Kern der Preßform anliegenden Innenfläche derjenigen des Kerns selbst. Eine entsprechende Gestaltung der Preßformen von Keramikköpern so, daß die zu behandelnde Oberfläche durch eine metallisch glatte Formfläche erzeugt wird, macht einen anschließenden Glättvorgang unnötig.

Wie bei dem eingangs besprochenen bekannten Verfahren ist die Verteilungsdichte der Strukturerhebungen auch in dem erfindungsgemäßen Verfahren durch die Wahl des Kornspektrums des verwendeten Pulvers bestimmt. Je gleichmäßiger das Kornspektrum des Pulvers ist, umso gleichmäßiger wird die auf der Oberfläche erzeugte Struktur, sofern diese durch die verbleibende strukturierte Glasphase gebildet ist. Zweckmäßig ist es, die Teilchengröße des Pulvers in der Größenordnung der erwünschten Erhebungen zu wählen und die Verteilungsdichte durch die Dispersionskonzentration in der Trägerflüssigkeit zu steuern. Grundsätzlich hat sich bei diesem Verfahren gezeigt, daß es zur Erzielung der die Selbstreinigungsfähigkeit bestimmenden Struktur umso günstiger ist, je geringer die Partikelgröße des Pulvermaterials ist. In der Ausführungsform des Verfahrens, in der die Glasphase weitgehend oder vollständig beseitigt wird, beruht dies offenbar auf der für das "Ansaugen" der Glasphase zur Verfügung stehenden großen Oberfläche des Pulvermaterials. In der Ausführungsform, bei der die Beseitigung der Glasphase nur zum Teil oder wenig stattfindet und die Glasphase selbst die Struktur aufbaut, wird durch die Feinheit des Pulvermaterials zugleich auch die Feinheit der Erhebungsstruktur in der entstandenen Glasphase bestimmt.

### Verfahren gemäß Patentanspruch 9

Bei diesem Verfahren wird durch das Benetzen der Fertigungshaut der noch nicht gebrannten keramischen Oberfläche darin eine Restrukturierung der die Oberfläche bildenden Keramikteilchen verursacht, unabhängig davon, ob die noch bildsame Fertigungshaut vor dem Trocknen oder die nicht mehr bildsame relativ harte Fertigungshaut nach dem Trocknen angefeuchtet wird. Die Neuanordnung bzw. Restrukturierung der Keramikteilchen erfolgt bei silikathaltigem Keramikmaterial offenbar aufgrund von Quellvorgängen der Minerale. Bei nicht silikathaltigem Keramikmaterial ist die Neuanordnung der Keramikteilchen durch eine ähnliche Erscheinung in einem eventuell vorhandenen Bindemittel zu vermuten oder, bei fehlendem Bindemittel, in einer durch die Flüssigkeit bedingten Verschiebung der Keramikteilchen relativ zueinander.

Die Menge an Flüssigkeit, mit der die keramische Oberfläche benetzt wird, ist im allgemeinen nicht kritisch. Die Oberfläche kann so stark benetzt werden, daß aufgrund des Saugvermögens der keramischen Masse der Keramikkörper weitgehend durchfeuchtet ist. Von Bedeutung ist nur eine so weitgehende Benetzung, daß die Fertigungshaut der keramischen Oberfläche durchfeuchtet ist. Die Fertigungshaut ist eine äußere Verdichtungszone des die Oberfläche bildenden Keramikmaterials, welche je nach Keramikmaterial und Trocknungsintensität unterschiedlich dick sein kann, jedoch in der Regel eine Mindestdicke von etwa 0,5 mm hat. Die Benetzung mit der Flüssigkeit, die vorzugsweise Wasser ist, kann folglich im allgemeinen auf ein geringes Ausmaß beschränkt bleiben, soll aber eine Feuchtschicht in der Oberfläche von maximal 0,5 mm Tiefe nicht unterschreiten.

Die durch die Benetzung erzeugte Neuanordnung der Keramikteilchen in der Fertigungshaut bleibt bei der anschließenden Trocknung vor dem Brennvorgang erhalten. Hierfür ist die Trocknung keine Voraussetzung für die Entstehung der angestrebten Oberflächenstruktur, jedoch zweckmäßig, weil die durch die Benetzung aufgeweichte Fertigungshaut nach ihrer Trocknung wieder ohne die Gefahr einer Beschädigung besser gehandhabt werden kann.

Auch bei dieser erfindungsgemäßen Verfahrensform hat sich gezeigt, daß die aufgrund der Benetzung der Fertigungshaut entstehende Neuanordnung der Keramikteilchen nach dem Brand zu einer Struktur der keramischen Oberfläche führt, die bezüglich der Höhe der aus der Oberfläche vorstehenden Erhebungen und deren Verteilungsdichte die Anforderungen erfüllt, die Voraussetzung sind für das Eintreten einer Selbstreinigungseigenschaft. Zu berücksichtigen ist allerdings, daß bei silikathaltigem Keramikmaterial der Oberfläche die "Täler" zwischen den Erhebungen teilweise durch die oberflächlich auftretende Glasphase beim Brand gefüllt werden. Im Ergebnis sind daher die Erhebungen bei solchen Keramikmaterialien niedriger, d. h. die Mattigkeit oder Rauhigkeit des Erscheinungsbilds der Oberfläche wirkt feiner. Die angestrebte Wirksamkeit wird dadurch jedoch nicht herabgesetzt, weil zumindest bei Einhaltung der vorstehend angegebenen Dicke der Feuchteschicht die Höhe der Erhebungen in dem brauchbaren Bereich bleibt. Bei nicht silikathaltigen Keramikmaterialien bleibt die durch die Benetzung erzielte Struktur der Oberfläche bezüglich der Höhe der Erhebungen auch nach dem Brand weitgehend unverändert erhalten.

### Verfahren gemäß Patentanspruch 13

Bei diesem erfindungsgemäßen Verfahren wird die angestrebte Struktur der keramischen Oberfläche allein durch die Wahl des Formvorgangs, nämlich in einem Trocken- oder Halbtrocken-Preßverfahren, und durch die Härte der für diese Art von Formvorgang eingesetzten bildsamen Komponente und/oder durch die Nachgiebigkeit einer die Oberfläche formenden Formwand bestimmt. Trocken- und Halbtrocken-Preßverfahren arbeiten aufgrund des geringen Feuchtigkeitsgehalts der keramischen Formmasse mit relativ hohen Drücken (bis zu 1000 bar und darüber) und werden vorwiegend als sogenanntes isostatisches Pressen ausgeführt. Hierbei kommt eine Preßform zum Einsatz, die eine bewegliche Formwand in Gestalt einer Membran aufweist, während die übrige Wand der Formhöhlung in der Regel aus Metall oder Kunststoff besteht und entsprechend glatt ist. Bei dem erfindungsgemäßen Verfahren wird zur Erzeugung der Struktur bewußt in einer Alternative die durch eine einstellbare Härte der bildsamen Kornkomponente in der Formmasse und damit deren Widerstand dagegen ausgenützt, sich unter dem bestehenden Preßdruck vollkommen an die Formwand anzulegen und sich in ihrer Rauhigkeit an deren Glätte anzugleichen. Es verbleibt damit gezielt eine Rauhigkeit, die im wesentlichen durch die Teilchengröße der die bildsame Kornkomponente ausmachenden Keramikteilchen und deren gegenseitigen Abstand bestimmt ist. Auch hierbei erhält man wieder eine Höhe der Strukturerhebungen und deren gegenseitigen Abstand, die eine Voraussetzung für die zu erzielende Selbstreinigungseigenschaft sind. Die zur Erzeugung der strukturierten Oberfläche herangezogene Formwand kann in diesem Fall sowohl die Membran als auch die Metall- oder Kunststoffwandung sein.

Zu einem bestimmten Grad kann die so erzielte "rauhe" Fertigungshaut der Oberfläche durch eine Absenkung des für vergleichbare Keramikkörper üblicherweise verwendeten Preßdrucks sein. Jedoch läßt die geforderte Gestaltfestigkeit solcher Keramikkörper diesbezüglich keine wesentlichen Abweichungen des Preßdrucks zu. Bevorzugt ist die Einstellung der Struktur durch die gewählte Härte der bildsamen Kornkomponente, die sich teils durch deren Trockenheit, teils und wiederum bevorzugt durch die Zusammensetzung dieser Kornkomponente steuern läßt. So kann beispielsweise die keramische Formmasse von vornherein zusätzlich zu der bildsamen Kornkomponente auch eine unbildsame Kornkomponente enthalten, die von der bildsamen Kornkomponente eingeschlossen wird und diese bezüglich ihrer "Verschiebbarkeit" im Preßvorgang beeinflußt. Als unbildsame Kornkomponente eignen sich alle inerten Materialien, die den Brand weitgehend unverändert überstehen, auch Metalle; bevorzugt wird ein Granulat aus Schamotte, Klinker, Ziegeln, Mullit, Korund, Siliciumcarbid, Siliciumnitrid, Aluminiumoxid und dergleichen eingesetzt.

Bevorzugt wird bei dem erfindungsgemäßen Verfahren die Härte der bildsamen Kornkomponente der Formmasse durch Verwendung eines Aufbaugranulats gesteuert. Bei dem Aufbaugranulat sind die Teilchen der unbildsamen inerten Kornkomponente von der bildsamen plastischen Kornkomponente umhüllt und bestimmen daher "individuell" und daher sehr gleichmäßig die Härte der Teilchen der keramischen Formmasse. Verfahren zur Erzeugung eines Aufbaugranulats dieser Art sind bekannt und bedürfen hier keiner näheren Erläuterung (vgl. DE 195 41 481 A1). In einem einfachen Verfahren kann hierbei die unbildsame inerte Kornkomponente mit einer mittleren Teilchengröße von 1 µm bis 1500 µm, bevorzugt von 200 µm bis 500 µm, mit Wasser gemischt werden, die bildsame plastische Kornkomponente mit einer mittleren Teilchengröße von 1 bis 100 µm mit dem Gemisch der unbildsamen Kornkomponente vermischt werden und das so erhaltene Gemisch von unbildsamer und bildsamer Kornkomponente daraufhin pelletiert werden. Die bildsame Kornkomponente wirkt bei silikathaltigen keramischen Formmassen neben zusätzlichen Bindemitteln wie z.B. CMC vor dem Brand auch als Bindemittel. Entsprechend kann unter Verwendung von Bindemitteln bei nicht silikathaltigen Formmassen vorgegangen werden, bei denen das Aufbaugranulat mittels Bindemittel erzeugt wird.

In einer zweiten Alternative dieses Verfahrens wird anstelle einer bestimmten einstellbaren Härte der bildsamen Kornkomponente oder zusätzlich dazu eine bestimmte Nachgiebigkeit der durch die Membran gebildeten beweglichen Formwand der Formhöhlung ausgenützt. Es hat sich nämlich gezeigt, daß die an der Oberfläche liegenden Körner der härteren unbildsamen Kornkomponente dem von der Membran ausgeübten Verschiebungsdruck einen größeren Verschiebungsdruck als die weichere bildsame Kornkomponente entgegensetzen. Das äußert sich dahin, daß die harten Körner der unbildsamen Kornkomponente aufgrund der Nachgiebigkeit der Kunststoffmembran sich etwas in diese eindrücken, während die weichere Komponente im Zuge der Verdichtung relativ stärker komprimiert wird. Hierdurch werden die harten Körner der unbildsamen Kornkomponente in einem gewissen Ausmaß freigelegt und bilden damit eine Oberflächenstruktur an der keramischen Oberfläche. Diese Freilegung wird erfindungsgemäß ausgenützt, indem der Anteil und die Partikelgröße der unbildsamen Kornkomponente in Übereinstimmung mit den diesbezüglichen Erfordernissen, die an die Erzielung einer Selbstreinigungseigenschaft gestellt sind, gewählt wird. Darüberhinaus kann durch die Wahl der Nachgiebigkeit der die Formwand bildenden Membran, d.h. durch die Wahl des Membranwerkstoffs, das Erscheinen der angestrebten Oberflächenstruktur ebenfalls gesteuert werden. Je härter der Membranwerkstoff ist, umso geringer können die Körner der unbildsamen Kornkomponente in sie eindringen und umso glatter, d.h. unstrukturierter, wird die Oberfläche.

Die angestrebte Verteilungsdichte, die Voraussetzung für die Erzielung einer Selbstreinigungsfähigkeit ist, läßt sich bei dieser Ausführungsform des Erfindungsgemäßen Verfahrens mit Vorteil dadurch steuern, daß für die keramische Formmasse ein Sprühgranulat verwendet wird, dessen Körner die bildsame und die unbildsame Komponente von vornherein in einem vorbestimmten Ausmaß enthalten. Das Sprühgranulat, das regelmäßig in hohlkugeliger Form vorliegt, bestimmt in ähnlicher Weise wie das vorstehend geschilderte Aufbaugranulat die Härte der bildsamen Kornkomponente der Formmasse durch den Anteil an unbildsamer Kornkomponente in den Granulatkörnern. Je größer der Anteil der unbildsamen Kornkomponente darin ist, umso geringer ist die Neigung, bei der im Zuge des Preßverfahrens eintretenden Zermalmung die Oberfläche zu nivellieren, d.h. sie weitgehend unstrukturiert glatt auszubilden. Damit liegen die harten Anteile des Sprühgranulats in der entsprechenden Verteilungsdichte an der Oberfläche vor und drücken sich in dem geschilderten Ausmaß in die nachgiebige Membranwand ein.

Es hat sich gezeigt, daß die Selbstreinigungseigenschaft der die Erhebungen aufweisenden keramischen Oberfläche bei einer Höhe der Erhebungen von 10 bis 30 µm zusätzlich zu der angestrebten hydrophoben Eigenschaft der Oberfläche eine lipophobe Eigenschaft ergibt ist. Dies ist deshalb überraschend, weil man im allgemeinen davon ausgeht, daß eine hydrophobe Eigenschaft eine lipophobe Eigenschaft ausschließt und das Synonym für eine lipophile Eigenschaft ist. Die lipophobe Eigenschaft ist von Vorteil, weil dadurch die auch bezüglich fettiger Verunreinigungen vorhandene Selbstreinigungseigenschaft gefördert wird. Da solche Verunreinigungen durch Ruße oder hochgesättigte Fette/Öle gerade in Industriegegenden ausgeprägt sind, ist es günstig für keramische Oberflächen, die in diesen Gegenden zum Einsatz kommen (z. B. Dachziegel), oder für die Innenflächen von Kamin-Rauchrohren eine entsprechende Struktur zu erhalten. Bei den vorstehend beschriebenen erfindungsgemäßen Verfahren läßt sich leicht eine Struktur dieser Art erzielen.

### Verfahren gemäß Patentanspruch 19

Im Rahmen dieser Verfahrensform kann die unbildsame Kornkomponente der keramischen Formmasse unmittelbar zur Erzeugung der Oberflächenstruktur herangezogen werden. In diesem Fall wird durch eine hinreichend große anteilige Menge an unbildsamer Kornkomponente dafür gesorgt, daß sie in der für die gewünschte Verteilungsdichte notwendigen Konzentration und homogenen Verteilung in der Formmasse vorliegt. Auch hierfür eignet sich z.B. ein Sprühgranulat.

Die mittlere Teilchengröße der unbildsamen Kornkomponente liegt ihrerseits in dem Größenbereich, den die Erhebungen nach dem Brand haben sollen. Bei dem Formvorgang des die Oberfläche aufweisenden Keramikkörpers, der hier ein Strangpreßverfahren (z.B. Biberschwanz-Dachziegel oder Kaminrohre), ein Trocken- oder Halbtrocken-Preßverfahren oder ein Gießverfahren sein kann, entsteht zunächst eine Oberfläche, in welcher die Teilchen der unbildsamen Kornkomponente weitgehend eingebettet sind, d.h. die Oberfläche glatt ist. Durch die Wahl einer Bindekomponente mit ausgeprägter Schwindung beim Brand werden die Teilchen der unbildsamen Kornkomponente zunehmend exponiert und ergeben dadurch an der fertig gebrannten Oberfläche des Keramikkörpers die angestrebte Erhebungsstruktur. Bei silikathaltigen Formmassen wird als Bindekomponente mit ausgeprägter Schwindung beim Brand bevorzugt eine bildsame Kornkomponente der Formmasse eingesetzt, die Tonkomponenten mit ausgeprägter Schwindung umfaßt. Durch gezielte Auswahl solcher Tonkomponenten mit hoher bis niedriger Schwindung läßt sich das Ausmaß der "Zurückbildung" der Oberfläche beim Brand und damit der Exposition der unbildsamen Kornkomponente an der Oberfläche steuern. Maßgeblich für die entstehende Erhebungsstruktur ist somit die Teilchengröße der unbildsamen Kornkomponente, deren Konzentration in der Formmasse und die Schwindung der Bindekomponente beim Brand.

Auch bei dieser Verfahrensform kommt für die unbildsame Kornkomponente ein Granulat aus den Werkstoffen in Betracht, das vorstehend auch in Zusammenhang mit dem Trocken- bzw. dem Halbtrocken-Preßverfahren beschrieben ist.

### Hydrophobierung

Bei allen vorstehend beschriebenen Verfahren wird anschließend an den Brennvorgang die keramische Oberfläche hydrophobiert, um die Oberfläche und insbesondere die Struktur darauf hydrophob zu machen, wodurch letztlich die angestrebte Selbstreinigungseigenschaft entsteht. Das Hydrophobieren kann in bekannter Weise und mit bekannten Mitteln, z.B. durch Anwendung von Polysiloxanen, durchgeführt werden. Es ist aber auch möglich, hierfür anorganisch-organische Hybridpolymere oder Fluorsilane zu verwenden. Als anorganisch-organische Hybridpolymere kommen Verbindungen in Betracht, die ein molekulares oder nanostrukturiertes Basismaterial mit anorganischen und organischen Elementen aufweisen (vgl. "First European Workshop on Hybrid Organic-Inorganic Materials - Centre National de la Recherche Scientifique, Chäteau de Bierville, 8.-10. November 1993). Solche Hybridpolymere sind bekannt unter dem Markennamen ORMOCER des Fraunhofer-Instituts für Silikat ISC, Würzburg oder durch die Firma nanogate GmbH, Saarbrücken. Hergestellt werden die Hybridpolymere überwiegend durch Hydrolyse und Kondensation von Kieselsäureestern und Metallalkoholaten als Grundmaterialien. Spezielle Eigenschaften erhalten diese Systeme durch den Einbau von organisch modifizierten Kieselsäurederivaten in das Silikat-Netzwerk. Dadurch können gezielt erwünschte Eigenschaften eingestellt werden und außerdem bewirken die organischen Anteile den Aufbau eines organischen Polymer-Netzwerks.

Die Hybridpolymere können in Wasser oder Lösemitteln dispergiert oder gelöst werden, so daß das Auftragen auf die zu behandelnde Oberfläche mit den üblichen Beschichtungstechniken wie Tauchen, Schleudern, Polieren, Gießen, Spritzen, Aufdampfen oder elektrostatischem Auftragen möglich ist. An das Auftragverfahren schließt sich ein Trocknungs- oder Härtungsprozeß an, der durch thermische Behandlung oder mit Hilfe von UV- oder Wärmestrahlung durchführbar ist. Je nach Bestimmungsart der Hybridpolymere kann die thermische Behandlung und Trocknung zwischen Raumtemperatur und 600°C durchgeführt werden.

Die Beschichtung keramischer glasierter Oberflächen mit anorganisch-organischen Hybridpolymeren dieser Art, beispielsweise im Sanitärbereich, ist bereits bekannt. Im vorliegenden Fall wird jedoch der Umstand ausgenützt, daß die Hybridpolymere auch an insbesondere grobkeramischen Oberflächen, von denen geringe Wasserdurchlässigkeit verbunden mit Atmungsfähigkeit gefordert ist,wie z.B. bei Dachziegeln, ohne Beeinträchtigung der Atmungsfähigkeit zur Hydrophobierung herangezogen werden können. Offenbar wird dies dadurch erreicht, daß die die Hybridpolymere aufbauenden Teilchen eine Größe im Nano-Bereich haben und entsprechend dünne, jedoch wirksame Schichten bilden können. Deshalb werden die Porenöffnungen des Kapillargefüges der keramischen Oberfläche und die freien Flächen des Kapillargefüges nahe der Oberfläche im Inneren des Keramikkörpers nicht verlegt und der dadurch gebildete Atmungsquerschnitt nicht erheblich herabgesetzt. Ist aber Atmungsaktivität der keramischen Oberfläche nicht benötigt oder erwünscht und wird, wie das beispielsweise bei Kaminrohren der Fall ist, eine Diffusions- und Feuchtigkeitssperre in der keramischen Oberfläche angestrebt, so kann bei entsprechend ausgedehnter Behandlung durch die Hybridpolymere oder durch Auswahl entsprechend porenverstopfender Hybridpolymere die Hydrophobierung in diesem Sinn ausgeführt werden.

Weiterhin hat sich überraschend gezeigt, daß die Hybridpolymere auch an nicht glasierten keramischen Oberflächen, die naturgemäß eine feinporöse Struktur des Keramikmaterials aufweisen, mit einer beträchtlichen Abtragfestigkeit gebunden werden können. Dies gilt auch für keramische Oberflächen mit der allein durch die Minerale des Keramikmaterials gebildeten Struktur, die durch die Beseitigung der beim Brand entstehenden Glasphase gemäß dem ersten der beschriebenen erfindungsgemäßen Verfahren entsteht. Die bekannte Bindung der Hybridpolymere bei den genannten glasierten Keramikoberflächen im Sanitärbereich wird einer Bindung von Komponenten des Silikat-Netzwerks an die SiO₂-Anteile der Glasur zugesprochen, die bei nicht glasierten keramischen Oberflächen fehlt. Offenbar gehen die Hybridpolymere bei der erfindungsgemäßen Behandlung auch grobkeramischer Oberflächen eine Bindung an SiO₂-Reste des Keramikmaterials ein, die zu der unerwarteten Haftfestigkeit führen.

Die Hybridpolymere dieser Art haben weitere Eigenschaften, die sie auch für die Verwendung zur Hydrophobierung von keramischen Oberflächen geeignet machen. So besteht keine Gefahr, daß dadurch Farben der Oberflächen verändert oder beeinträchtigt werden, weil die Hybridpolymere aufgrund der Kleinheit ihrer Teilchen die Reflexionsfähigkeit der Oberflächen nicht beeinträchtigen. Weiterhin wird durch die hydrophoben und lipophoben Gruppen, die in Hybridpolymere dieser Art "eingebaut" werden können, die durch die Struktur erzeugte Selbstreinigungseigenschaft der dadurch behandelten keramischen Oberflächen noch gesteigert. Deshalb kann damit gerechnet werden, daß Dachbaustoffe, insbesondere Dachziegel, oder Klinker- und Fassadenwände, die erfindungsgemäß strukturierte und hydrophobierte keramische Oberflächen aufweisen, allein durch Regen (oder durch gezielte Berieselung mit Wasser) von Schmutz frei bleiben. Darüber hinaus sind die Hybridpolymere sehr UV- und witterungsbeständig, wodurch die stark hydrophobe Eigenschaft der keramischen Oberflächen lang erhalten bleibt. Der ausgeprägte Selbstreinigungseffekt wird bei Kamin-Rauchrohren ausgenützt, um die Innenfläche davon durch das herablaufende Kondensat von Ruß und sonstigen festen Anlagerungen oder Verschmutzungen freizuhalten.

Die zur Hydrophobierung eingesetzten Hybridpolymere oder Fluorsilane können neben ihrer hydrophoben Eigenschaft auch auf hohe mechanische Widerstand- und Haftfestigkeit ausgelegt werden. Ihr Einsatz ist sogar zur Erhöhung der Kratzfestigkeit von glatten Oberflächen bekannt. Daher haften sie nach der Trocknung bzw. Aushärtung so fest an der behandelten keramischen Oberfläche, daß keine Beeinträchtigung der erzielten hydrophoben Eigenschaft durch mechanische Abtragung zu befürchten ist. So können erfindungsgemäß behandelte Keramikkörper in üblicher Weise transportiert und mechanisch belastet werden.Im vorliegenden Fall führt die Anwendung der Hybridpolymere oder Fluorsilane dazu, daß nach dem Hydrophobieren der die Erhebungen aufweisenden keramischen Oberfläche die an sich aufgrund ihrer exponierten Lage mechanisch stärker beanspruchten Erhebungen nachhaltig sowohl hydrophobiert bleiben als auch ein gegebenenfalls eingesetztes Antifoulingmittel darin gehalten wird, auch wenn beispielsweise so behandelte Dachziegel häufig begangen werden.

Als Fluorsilane kommen fluoralkylfunktionelle Silane in Betracht, die mit Wasser unter Hydrolyse und Abspaltung von Ethanol zu einem reaktiven Silanol reagieren, wobei das Silanol chemisch an ein anorganisches Substrat gebunden werden kann. Durch chemische Reaktion mit der zu behandelnden Oberfläche wird eine Si-O-Bindung an die Oberfläche ausgebildet. Daran schließt sich eine Quervernetzung unter Ausbildung eines Siloxan-Netzwerks an. Die Fluorsilane ergeben ebenfalls außerordentlich dünne Schichten im Nanometerbereich, die in den Porenöffnungen des Kapillargefüges der keramischen Oberfläche und auf den freien Flächen des Kapillargefüges nahe der Oberfläche im Inneren des Keramikkörpers aufgebaut werden. Daher läßt sich mittels der Fluorsilane eine Hydrophobierung insbesondere grobkeramischer Oberflächen erreichen, durch welche die häufig erwünschte Atmungsfähigkeit nicht herabgesetzt wird. Auch hier kann durch entsprechend ausgedehnte Behandlungsdauer oder durch Auswahl gezielt porenverstopfender Fluorsilane eine nicht erforderliche oder sogar unerwünschte Atmungsfähigkeit unterbunden und dadurch eine Diffusions- und Feuchtigkeitssperre erzielt werden.

Fluorsilane der beschriebenen Art sind im Handel unter dem Markennamen DYNASYLAN F 8261 (in Abwandlungen davon unter F 8810, F 8262 und F 8263) der Firma Sivento Chemie GmbH, Düsseldorf, erhältlich.

Die Fluorsilane können mit Wasser und Lösemitteln, z. B. Ethanol, gemischt werden, so daß das Auftragen auf die zu behandelnde Oberfläche mit den üblichen Beschichtungstechniken wie Tauchen, Sprühen, Streichen oder Polieren möglich ist. An das Auftragverfahren schließt sich ein Trocknungs- oder Vernetzungsprozeß an, der durch thermische Behandlung oder mit Hilfe von UV- oder Wärmestrahlung durchführbar ist. Die thermische Behandlung kann zwischen Raumtemperatur und 150°C durchgeführt werden. Günstiger ist jedoch ein Einbrennvorgang bei Temperaturen bis 600°C, weil sich gezeigt hat, daß dadurch ohne ins Gewicht fallende Herabsetzung der erhaltenen hydrophoben Eigenschaft eine erhebliche Steigerung der mechanischen Belastbarkeit, wie Abriebfestigkeit, mit einhergeht.

Auch die Fluorsilane haben weitere Eigenschaften, die sie für die Verwendung zur Hydrophobierung von keramischen Oberflächen geeignet machen. So besteht keine Gefahr, daß dadurch Farben der Oberflächen verändert oder beeinträchtigt werden, weil aufgrund der so geringen Schichtdicken die Reflexionsfähigkeit der keramischen Oberflächen nicht beeinträchtigt wird. Weiterhin wird durch ihre hydrophobe und lipophobe Eigenschaft die schon durch die Strukturierung erzielte Selbstreinigungseigenschaft der keramischen Oberflächen noch gefördert. Deshalb kann damit gerechnet werden, daß Dachbaustoffe, insbesondere Dachziegel sowie Klinker- und Fassadenwände, die erfindungsgemäß behandelte keramische Oberflächen aufweisen, allein durch Regen (oder durch gezielte Berieselung mit Wasser) von Schmutz frei bleiben. Darüber hinaus sind die Fluorsilane sehr UV- und witterungsbeständig, wodurch die stark hydrophobe Eigenschaft und damit der Selbstreinigungseffekt der keramischen Oberflächen lang erhalten bleibt.

Das Verfahren zur Hydrophobierung kann auch unter Heranziehung von unterschiedlichen Hydrophobierungsmitteln durchgeführt werden. Diese können in der Form eingesetzt werden, daß in einer ersten Behandlungsstufe ein weniger UV-beständiges und daher billigeres Mittel verwendet wird, durch welches das oberflächennahe Kapillargefüge der Oberfläche bis zu einer gewünschten Tiefe imprägniert wird. In einer zweiten Behandlungsstufe wird dann mit einem UV-beständigen und daher teureren Mittel gearbeitet, das somit weitgehend auf die Oberfläche beschränkt ist und den hydrophoben Zustand über lange Zeit hinweg aufrecht erhält. Als Beispiel sei genannt eine Hydrophobierung in der ersten Behandlungsstufe mittels der herkömmlich verwendeten Polysiloxane oder Silane und eine nachfolgende zweite Behandlungsstufe mit Hybridpolymeren oder Fluorsilanen.

### Behandlung mit einem bewuchshemmenden Mittel

Neben der Behandlung der keramischen Oberfläche zur Hydrophobierung kann auch eine Behandlung mit einem bewuchshemmenden Mittel (Antifouling-Mittel) durchgeführt werden. Grundsätzlich kann das bewuchshemmende Mittel in einer Flüssigkeit, mit der die keramische Oberfläche behandelt wird, enthalten sein. Als solche Mittel kommen diejenigen in Betracht, die in bekannten Antifouling-Farben zum Einsatz kommen und Kupfer, Zink, Zinn, Bromide, Phosphate, Fluoride usw. als Wirkstoffe enthalten. Zweckmäßigerweise ist das Antifouling-Mittel aber bereits in der Flüssigkeit enthalten, die zur Hydrophobierung der Oberfläche herangezogen wird. Um die vorstehend beschriebenen Vorteile der Hybridpolymere auszunützen, ist vorzuziehen, daß bewuchshemmende Gruppen oder Radikale der genannten Verbindungen unmittelbar in das Netzwerk der Hybridpolymere eingebunden sind. Die Fluorsilane haben von sich aus bereits eine bewuchshemmende Wirkung, die sie sogar zum Einsatz als Antifouling-Mittel in Farben geeignet macht. Es kann auch hier daran gedacht sein, daß bewuchshemmende Gruppen oder Radikale der genannten Verbindungen unmittelbar in das Netzwerk der Fluorsilane eingebunden sind.

Das Einbringen von bewuchshemmendem Mittel in die keramische Oberfläche kann aber auch bereits vor dem Brand des entsprechenden Keramikkörpers erfolgen. Hierzu kann das Antifouling-Mittel auf die im Rahmen der vorstehend beschriebenen erfindungsgemäßen Verfahren noch zu behandelnde bzw. soeben behandelte Oberfläche aufgetragen und darin infiltriert werden. Letzteres gilt insbesondere für das Verfahren, bei dem die Struktur der keramischen Oberfläche durch deren Benetzung mit einer Flüssigkeit ausgebildet wird. In diesem Fall enthält die Flüssigkeit auch das Antifouling-Mittel, wobei dieses im Zuge des Anweichens der Fertigungshaut in die Oberfläche eindringt, oder es wird unmittelbar anschließend auf die noch feuchte Oberfläche aufgebracht. Im Fall des Verfahrens gemäß Anspruch 29 kann das Antifouling-Mittel wie das Hydrophobiermittel unmittelbar dem Gemenge schon vor dem Aushärten zugegeben werden.

Das erfindungsgemäße Verfahren zur Erzeugung eines Selbstreinigungseffekts von keramischen Oberflächen ist gedacht und anwendbar auf jedem Gebiet der Keramik, wo ein Selbstreinigungseffekt denkbar und sinnvoll erscheint. In erster Linie gilt das für solche Keramikkörper, die üblicherweise der Witterung ausgesetzt sind und der Selbstreinigungseffekt durch natürliche Beregnung eintreten kann und daher keiner besonderen Reinigungsaktivität bedarf. Jedoch gilt das auch in Fällen, in denen Keramikkörper einer Verschmutzung (z. B. durch Staub, Öldunst oder Ablagerungen durch umgebende Strömung) ausgesetzt sind ohne sich im Freien zu befinden und daher nicht beregnet werden können. In diesem Fall liegt der Vorteil der Selbstreinigungsfähigkeit darin, daß die Verschmutzung einfach durch Berieseln oder Abwaschen mit einer Reinigungsflüssigkeit, vorzugsweise mit Wasser, beseitigt werden kann.

Auf dem Gebiet der Baustoff- und Grobkeramik, z.B. für Dachziegel, Klinker- und Fassadenwände, mit Keramikmaterial belegten Freitreppen und dgl., findet die Selbstreinigung allein durch immer wieder auftretenden Regen statt. Deshalb ist es zweckmäßig, diejenigen Flächen zu strukturieren, die sowohl der Verschmutzung als auch dem Regen ausgesetzt sein werden. Bei Dachziegeln oder Klinkern gilt das in erster Linie für deren Sichtseiten, erweist sich aber auch für die Unter- oder Hinterseiten davon als sinnvoll, wenn mit deren Verschmutzung während der Lagerung auf offenen Lagerflächen zu rechnen ist.

Entsprechendes gilt auch für Feinkeramik, z.B. für Fliesen, Waschbecken und sonstige Artikel der Sanitätskeramik bei denen eine Berieselung in Bädern und Naßzellen sowohl bei Benutzung wie bei gezieltem Abwaschen erfolgt. Weiterhin erweist sich die Ausnutzung des Selbstreinigungseffekts aber auch bei Keramikkörpern der Elektrokeramik als von Vorteil, z.B. bei elektrischen Isolatoren von Schaltern oder Leitungen, die im Freien dem Schmutz- und Staubniederschlag ausgesetzt sind. Nässe plus Schmutzschichten erhöhen hier die Neigung zu Überschlag und können leicht entfernt werden, wenn solche Keramikkörper an ihrer Oberfläche durch Anwendung des erfindungsgemäßen Verfahrens entsprechend strukturiert sind. Auch an den Innenflächen von Keramik-Rauchrohren kann es von Vorteil sein, durch Ausbildung einer den Selbstreinigungseffekt bewirkenden Struktur dafür zu sorgen, daß durch herablaufendes Wasser (z.B. durch Einregnen) oder auch durch herablaufendes Kondensat die Innenfläche von Ruß und festen Anlagerungen oder Verschmutzungen freigehalten wird. Weiterhin empfiehlt sich die erfindungsgemäß geschaffene Selbstreinigungsfähigkeit auch für Keramikkörper der Gebrauchskeramik, z. B. Blumentöpfe, Blumenvasen, Geschirr und dergleichen, die dadurch gegebenenfalls auch ohne Verwendung von Reinigungsmitteln allein durch Wasser leicht gesäubert werden können. Schließlich kann die Schaffung eines Selbstreinigungseffekts auch bei Keramikkörpern auf dem Gebiet der technischen Keramik sinnvoll sein, z. B. bei solchen Keramikkörpern, auf denen durch Kontakt mit ständiger oder vorübergehender Strömung Anlagerungen entstehen können. Dies ist beispielsweise bei Keramikdichtungen oder Keramikventilkörpern der Fall, bei denen es wesentlich ist, die jeweilige Dichtfläche von Anlagerungen freizuhalten.

## Patentansprüche

1. Verfahren zur Erzeugung einer Selbstreinigungseigenschaft einer keramischen Oberfläche durch Ausbildung einer Struktur von Erhebungen vorbestimmter Höhe und Verteilungsdichte auf der Oberfläche, bei dem auf die keramische Oberfläche vor dem Brennen des die Oberfläche aufweisenden Keramikkörpers ein Pulver aus einem Material aufgebracht wird, das bei der Brenntemperatur beständig ist und keine oder nur eine geringe Bindung mit der Oberfläche eingeht, der Keramikkörper gebrannt wird, das vor dem Brennen auf der Oberfläche aufgebrachte Pulver nach dem Brennen von der Oberfläche wieder entfernt wird und die von dem Pulver freie Oberfläche hydrophobiert wird.

2. Verfahren nach Anspruch 1,
**dadurch gekennzeichnet,**
**dass** das Pulvermaterial eine ausgeprägte Affinität zu der bei dem Brennvorgang auftretenden Glasphase (SiO₂-Phase) der zu brennenden keramischen Oberfläche hat.

3. Verfahren nach Anspruch 1 oder 2,
**dadurch gekennzeichnet,**
**dass** das Pulver ein Al₂O₃- oder Al(OH)₃-Pulver oder ein Pulver aus hoch tonerdehaltigem Ton oder Mischungen daraus ist.

4. Verfahren nach einem der Ansprüche 1 bis 3,
**dadurch gekennzeichnet,**
**dass** das Pulver in Form einer Dispersion in einer Trägerflüssigkeit auf die Oberfläche aufgebracht wird.

5. Verfahren nach einem der Ansprüche 1 bis 4,
**dadurch gekennzeichnet,**
**dass** die Dispersion auf die Oberfläche durch Schütten, Tauchen oder Sprühen oder in einem elektrostatischen Auftragverfahren aufgebracht wird.

6. Verfahren nach Anspruch 4,
**dadurch gekennzeichnet,**
**dass** auf der Oberfläche eine Schicht der Trägerflüssigkeit erzeugt und das Pulver in die Schicht eingestreut wird.

7. Verfahren nach einem der Ansprüche 1 bis 6,
**dadurch gekennzeichnet,**
**dass** die Oberfläche bei dem Formvorgang des Keramikkörpers oder anschließend an den Formvorgang geglättet wird.

8. Verfahren nach einem der Ansprüche 1 bis 7,
**dadurch gekennzeichnet,**
**dass** ein Pulvermaterial mit einer der Farbe der keramischen Oberfläche entsprechenden Farbe verwendet wird.

9. Verfahren zur Erzeugung einer Selbstreinigungseigenschaft einer keramischen Oberfläche durch Ausbildung einer Struktur von Erhebungen vorbestimmter Höhe und Verteilungsdichte auf der Oberfläche, bei dem die keramische Oberfläche vor dem Brennen des die Oberfläche aufweisenden Keramikkörpers mit einer Flüssigkeit benetzt wird, um die Fertigungshaut der Oberfläche aufzuweichen, der Keramikkörper gebrannt wird und die Oberfläche hydrophobiert wird.

10. Verfahren nach Anspruch 9,
**dadurch gekennzeichnet,**
**dass** die Oberfläche mit Wasser benetzt wird.

11. Verfahren nach Anspruch 9 oder 10,
**dadurch gekennzeichnet,**
**dass** die Benetzung eine Feuchtschicht in der Oberfläche von mindestens der Dicke der Fertigungshaut ergibt.

12. Verfahren nach einem der Ansprüche 9 bis 11,
**dadurch gekennzeichnet,**
**dass** die durch die Benetzung entstehende Feuchtschicht vor dem Brennen getrocknet wird.

13. Verfahren zur Erzeugung einer Selbstreinigungseigenschaft einer keramischen Oberfläche durch Ausbildung einer Struktur von Erhebungen vorbestimmter Höhe und Verteilungsdichte auf der Oberfläche, bei dem der die Oberfläche aufweisende Keramikkörper in einem Trocken- oder Halbtrocken-Pressverfahren in einer eine Membran aufweisenden Pressform aus einer keramischen Formmasse geformt wird, wobei die Formmasse eine unbildsame und eine bildsame Kornkomponente enthält und die Härte der bildsamen Kornkomponente und/oder die Nachgiebigkeit der Membranfläche bei dem Formvorgang derart gewählt wird, dass die Fertigungshaut des geformten Keramikkörpers die Erhebungsstruktur aufweist, der Keramikkörper gebrannt und die Oberfläche hydrophobiert wird.

14. Verfahren nach Anspruch 13,
**dadurch gekennzeichnet,**
**dass** die Höhe des Pressdrucks bei dem Formvorgang gegenüber einem Normalwert verringert wird.

15. Verfahren nach Anspruch 14,
**dadurch gekennzeichnet,**
**dass** die keramische Formmasse durch ein Aufbaugranulat oder ein Sprühgranulat gebildet ist, welches aus der unbildsamen Kornkomponente und der bildsamen Kornkomponente hergestellt ist.

16. Verfahren nach Anspruch 14 oder 15,
**dadurch gekennzeichnet,**
**dass** als unbildsame Kornkomponente Pulver aus hitzebeständigen inerten Partikeln verwendet werden.

17. Verfahren nach einem der Ansprüche 13 bis 16,
**dadurch gekennzeichnet,**
**dass** die Teilchen der bildsamen Kornkomponente eine Teilchengröße von 1 bis 100 µm und die Teilchen der unbildsamen Komkomponente eine Teilchengröße von 1 bis 1500 µm, vorzugsweise von 200 bis 500 µm, haben.

18. Verfahren nach einem der Ansprüche 1 bis 17,
**dadurch gekennzeichnet,**
**dass** die keramische Oberfläche nach dem Brand mit einem anorganisch-organischen Hybridpolymer oder mit einem Fluorsilan hydrophobiert wird.

19. Verfahren zur Erzeugung einer Selbstreinigungseigenschaft einer keramischen Oberfläche durch Ausbildung einer Struktur von Erhebungen vorbestimmter Höhe und Verteilungsdichte auf der Oberfläche, bei dem der die Oberfläche aufweisende Keramikkörper aus einer keramischen Formmasse geformt wird, die eine unbildsame Kornkomponente und eine Bindekomponente mit ausgeprägter Schwindung beim Brand enthält, der Keramikkörper gebrannt und die Oberfläche hydrophobiert wird.

20. Verfahren nach Anspruch 19,
**dadurch gekennzeichnet,**
**dass** die Bindekomponente eine Tonkomponente mit hoher Schwindung beim Brand ist.

21. Verfahren nach Anspruch 19,
**dadurch gekennzeichnet,**
**dass** die Bindekomponente beim Brand des Keramikkörpers vollständig verschwindet und die Teilchen der unbildsamen Kornkomponente durch Sintern aneinander gebunden werden

22. Verfahren nach einem der Ansprüche 19 bis 21,
**dadurch gekennzeichnet,**
**dass** die Teilchen der unbildsamen Komkomponente eine Teilchengröße von 1 bis 1500 µm aufweisen.

23. Verfahren nach einem der Ansprüche 1 bis 22,
**dadurch gekennzeichnet,**
**dass** die keramische Oberfläche in einer ersten Hydrophobierstufe mit einem ersten Hydrophobiermittel behandelt wird, um dessen Eindringen zumindest in eine oberflächennahe Schicht zu bewirken, und in einer zweiten Hydrophobierstufe mit einem zweiten UV-beständigen und/oder abriebfesten Hydrophobiermittel behandelt wird.

24. Verfahren nach Anspruch 23,
**dadurch gekennzeichnet,**
**dass** die Oberfläche in der ersten Hydrophobierstufe mit einem Polysiloxan oder Silan und in der zweiten Hydrophobierstufe mit einem anorganisch-organischen Hybridpolymer und/oder einem Fluorsilan behandelt wird.

25. Verfahren nach einem der Ansprüche 1 bis 24,
**dadurch gekennzeichnet,**
**dass** die keramische Oberfläche vor und/oder nach dem Brand mit einem bewuchshemmenden Mittel behandelt wird.

26. Verfahren nach den Ansprüchen 9 und 25,
**dadurch gekennzeichnet,**
**dass** das bewuchshemmende Mittel der Flüssigkeit zur Benetzung der Oberfläche beigemischt wird.

27. Verfahren nach den Ansprüchen 1 und 25,
**dadurch gekennzeichnet,**
**dass** das bewuchshemmende Mittel einer Trägerflüssigkeit für das auf die Oberfläche aufzubringende Pulver beigemischt wird.

28. Keramischer Körper mit selbstreinigender Oberfläche, wobei die Oberfläche eine Struktur von hydrophoben Erhebungen aufweist,
**dadurch gekennzeichnet,**
**dass** die Erhebungen aus dem Keramikmaterial der Oberfläche selbst ausgebildet sind, wobei die Oberfläche eine Struktur von Erhebungen vorbestimmter Höhe und Verteilungsdichte aufweist.

## Claims

1. Process for producing a self-cleaning property of a ceramic surface by forming a structure of elevations of predetermined height and distribution density on the surface, in which a powder of a material which is stable at the firing temperature and undergoes no or only little bonding with the surface is applied to the ceramic surface prior to firing of the ceramic body having this surface, the ceramic body is fired, the powder applied to the surface prior to firing is removed again from the surface after firing and the powder-free surface is hydrophobicized.

2. Process according to Claim 1, **characterized in that** the powder material has a pronounced affinity for the glass phase (SiO₂ phase) formed during the firing process on the ceramic surface being fired.

3. Process according to Claim 1 or 2, **characterized in that** the powder is an Al₂O₃ or Al(OH)₃ powder or a powder of high-alumina clay or mixtures thereof.

4. Process according to any of Claims 1 to 3, **characterized in that** the powder is applied in the form of a dispersion in a carrier liquid to the surface.

5. Process according to any of Claims 1 to 4, **characterized in that** the dispersion is applied to the surface by pouring, dipping or spraying or in an electrostatic application process.

6. Process according to Claim 4, **characterized in that** a layer of the carrier liquid is produced on the surface and the powder is sprinkled into the layer.

7. Process according to any of Claims 1 to 6, **characterized in that** the surface is smoothed during shaping of the ceramic body or subsequent to the shaping process.

8. Process according to any of Claims 1 to 7, **characterized in that** a powder material having a colour corresponding to the colour of the ceramic surface is used.

9. Process for producing a self-cleaning property of a ceramic surface by forming a structure of elevations of predetermined height and distribution density on the surface, in which the ceramic surface is wetted with a liquid to soften the manufacturing skin of the surface prior to firing the ceramic body having the surface, the ceramic body is fired and the surface is hydrophobicized.

10. Process according to Claim 9, **characterized in that** the surface is wetted with water.

11. Process according to Claim 9 or 10, **characterized in that** the wetting produces a moisture layer in the surface having at least the thickness of the manufacturing skin.

12. Process according to any of Claims 9 to 11, **characterized in that** the moisture layer formed by wetting is dried prior to firing.

13. Process for producing a self-cleaning property of a ceramic surface by forming a structure of elevations of predetermined height and distribution density on the surface, in which the ceramic body having the surface is formed from a ceramic moulding composition in a dry or semidry pressing process in a pressing mould having a membrane, where the moulding composition has a nonplastic particle component and a plastic particle component and the hardness of the plastic particle component and/or the degree to which the membrane will yield in the shaping process is selected so that the manufacturing skin of the shaped ceramic body has the elevation structure, the ceramic body is fired and the surface is hydrophobicizea.

14. Process according to Claim 13, **characterized in that** the pressing pressure in the shaping process is reduced compared to a normal value.

15. Process according to Claim 14, **characterized in that** the ceramic moulding composition is made up of granular material which has been formed by agglomeration granulation or spray drying and has been produced from the nonplastic particle component and the plastic particle component.

16. Process according to Claim 14 or 15, **characterized in that** powders of heat-resistant inert particles are used as nonplastic particle component.

17. Process according to any of Claims 13 to 16, **characterized in that** the particles of the plastic particle component have a particle size of from 1 to 100 µm and the particles of the nonplastic particle component have a particle size of from 1 to 1500 µm, preferably from 200 to 500 µm.

18. Process according to any of Claims 1 to 17, **characterized in that** the ceramic surface is hydrophobicized by means of an inorganic-organic hybrid polymer or by means of a fluorosilane after firing.

19. Process for producing a self-cleaning property of a ceramic surface by forming a structure of elevations of predetermined height and distribution density on the surface, in which the ceramic body having the surface is formed from a ceramic moulding composition comprising a nonplastic particle component and a binder component displaying pronounced shrinkage on firing, the ceramic body is fired and the surface is hydrophobicized.

20. Process according to Claim 19, **characterized in that** the binder component is a clay component displaying high shrinkage on firing.

21. Process according to Claim 19, **characterized in that** the binder component disappears completely on firing the ceramic body and the particles of the nonplastic particle component are joined to one another by sintering.

22. Process according to any of Claims 19 to 21, **characterized in that** the particles of the nonplastic particle component have a particle size of from 1 to 1500 µm.

23. Process according to any of Claims 1 to 22, **characterized in that** the ceramic surface is treated with a first hydrophobicizing agent in a first hydrophobicization step so that it penetrates at least into a layer close to the surface and the ceramic surface is treated with a second UV-resistant and/or abrasion-resistant hydrophobicizing agent in a second hydrophobicization step.

24. Process according to Claim 23, **characterized in that** the surface is treated with a polysiloxane or silane in the first hydrophobicization step and with an inorganic-organic hybrid polymer and/or a fluorosilane in the second hydrophobicization step.

25. Process according to any of Claims 1 to 24, **characterized in that** the ceramic surface is treated with an antifouling agent before and/or after firing.

26. Process according to Claims 9 and 25, **characterized in that** the antifouling agent is mixed into the liquid for wetting the surface.

27. Process according to Claims 1 and 25, **characterized in that** the antifouling agent is mixed into a carrier liquid for the powder to be applied to the surface.

28. Ceramic body having a self-cleaning surface which has a structure of hydrophobic elevations, **characterized in that** the elevations are formed by the ceramic material of the surface itself and the surface has a structure of elevations of predetermined height and distribution density.

## Revendications

1. Procédé pour produire une propriété autonettoyante d'une surface céramique par la formation d'une structure avec des bosses ayant une hauteur et une densité de répartition déterminées sur la surface, dans lequel, avant la cuisson de l'élément en céramique présentant la surface, une poudre d'un matériau qui résiste à la température de cuisson et qui ne participe pas, ou seulement de manière minime, à une liaison avec la surface est déposée sur la surface céramique, l'élément en céramique est cuit, la poudre déposée sur la surface avant la cuisson est éliminée à nouveau de la surface après la cuisson et la surface débarrassée de la poudre est rendue hydrophobe.

2. Procédé selon la revendication 1, **caractérisé en ce que** le matériau de la poudre possède une affinité marquée pour la phase vitreuse (phase SiO₂) de la surface céramique à cuire qui apparaît pendant le processus de cuisson.

3. Procédé selon la revendication 1 ou la revendication 2, **caractérisé en ce que** la poudre est une poudre d'Al₂O₃ ou d'Al(OH)₃ ou une poudre d'argile hautement aluminifère ou des mélanges de celles-ci.

4. Procédé selon l'une des revendications 1 à 3, **caractérisé en ce que** la poudre est déposée sur la surface sous la forme d'une dispersion dans un véhicule liquide.

5. Procédé selon l'une des revendications 1 à 4, **caractérisé en ce que** la dispersion est déposée sur la surface par coulée, immersion ou pulvérisation ou bien par un procédé de dépôt électrostatique.

6. Procédé selon la revendication 4, **caractérisé en ce qu'**une couche du véhicule liquide est réalisée sur la surface et **en ce que** la poudre est répandue dans cette couche.

7. Procédé selon l'une des revendications 1 à 6, **caractérisé en ce que** la surface est lissée lors de l'opération de formage de l'élément en céramique ou à la suite de l'opération de formage.

8. Procédé selon l'une des revendications 1 à 7, **caractérisé en ce que** l'on utilise un matériau en poudre ayant une couleur correspondant à la couleur de la surface céramique.

9. Procédé pour produire une propriété autonettoyante d'une surface céramique par la formation d'une structure avec des bosses ayant une hauteur et une densité de répartition déterminées sur la surface, dans lequel la surface céramique, avant la cuisson de l'élément en céramique présentant la surface, est mouillée avec un liquide afin de ramollir la peau de fabrication de la surface, l'élément en céramique est cuit et la surface est rendue hydrophobe.

10. Procédé selon la revendication 9, **caractérisé en ce que** la surface est mouillée avec de l'eau.

11. Procédé selon la revendication 9 ou la revendication 10, **caractérisé en ce que** le mouillage donne dans la surface une couche humide ayant au moins l'épaisseur de la peau de fabrication.

12. Procédé selon l'une des revendications 9 à 11, **caractérisé en ce que** la couche humide résultant du mouillage est séchée avant la cuisson.

13. Procédé pour produire une propriété autonettoyante d'une surface céramique par la formation d'une structure avec des bosses ayant une hauteur et une densité de répartition déterminées sur la surface, dans lequel l'élément en céramique présentant la surface est formé par un procédé de compression à sec ou semi sec, dans un moule de compression présentant une membrane, à partir d'une matière moulable céramique, dans lequel la matière moulable contient un composant granulaire non ductile et un composant granulaire ductile et la dureté du composant granulaire et/ou la souplesse de la surface de la membrane dans l'opération de formage est choisie de telle façon que la peau de fabrication de l'élément en céramique formé présente la structure à bosses, l'élément en céramique est cuit et la surface est rendue hydrophobe.

14. Procédé selon la revendication 13, **caractérisé en ce que** la hauteur de la pression de compression lors de l'opération de formage est diminuée par rapport à une valeur normale.

15. Procédé selon la revendication 14, **caractérisé en ce que** la matière moulable céramique est formée par un granulé accumulé ou un granulé pulvérisé qui est préparé à partir du composant granulaire non ductile et du composant granulaire ductile.

16. Procédé selon la revendication 14 ou 15, **caractérisé en ce que** l'on utilise comme composant granulaire non ductile des poudres constituées de particules inertes résistant à la chaleur.

17. Procédé selon l'une des revendications 13 à 16, **caractérisé en ce que** les particules du composant granulaire ductile ont une granulométrie dans la plage de 1 à 100 µm et les particules du composant granulaire non ductile ont une granulométrie dans la plage de 1 à 1500 µm, de préférence de 200 à 500 µm.

18. Procédé selon l'une des revendications 1 à 17, **caractérisé en ce que** la surface céramique est rendue hydrophobe après la cuisson au moyen d'un polymère hybride inorganiquelorganique ou au moyen d'un fluorosilane.

19. Procédé pour produire une propriété autonettoyante d'une surface céramique par la formation d'une structure avec des bosses ayant une hauteur et une densité de répartition déterminées sur la surface, dans lequel l'élément en céramique présentant la surface est formé à partir d'une matière moulable céramique contenant un composant granulaire non ductile et un composant liant présentant un retrait marqué lors de la cuisson, l'élément en céramique est cuit et la surface est rendue hydrophobe.

20. Procédé selon la revendication 19, **caractérisé en ce que** le composant liant est un composant argileux présentant un retrait important à la cuisson.

21. Procédé selon la revendication 19, **caractérisé en ce que** le composant liant disparaît complètement lors de la cuisson de l'élément en céramique et **en ce que** les particules du composant granulaire non ductile sont liées les unes aux autres par frittage.

22. Procédé selon l'une des revendications 19 à 21, **caractérisé en ce que** les particules du composant granulaire non ductile présentent une granulométrie dans la plage de 1 à 1500 µm.

23. Procédé selon l'une des revendications 1 à 22, **caractérisé en ce que** la surface céramique est traitée dans une première étape d'hydrophobisation avec un premier agent hydrophobisant afin d'assurer sa pénétration au moins dans une couche proche de la surface et, dans une deuxième étape d'hydrophobisation, avec un deuxième agent hydrophobisant résistant aux UV et/ou à l'abrasion.

24. Procédé selon la revendication 23, **caractérisé en ce que** la surface est traitée dans la première étape d'hydrophobisation avec un polysiloxane ou un silane et, dans la deuxième étape d'hydrophobisation, avec un polymère hybride inorganique/organique et/ou avec un fluorosilane.

25. Procédé selon l'une des revendications 1 à 24, **caractérisé en ce que** la surface céramique est traitée avec un agent antisalissure avant et/ou après la cuisson.

26. Procédé selon les revendications 9 et 25, **caractérisé en ce que** l'agent antisalissure est mélangé au liquide utilisé pour mouiller la surface.

27. Procédé selon les revendications 1 et 25, **caractérisé en ce que** l'agent antisalissure est mélangé à un véhicule liquide pour la poudre à déposer sur la surface.

28. Elément céramique avec une surface autonettoyante, dans lequel la surface présente une structure avec des bosses hydrophobes, **caractérisé en ce que** les bosses sont formées à partir du matériau céramique même de la surface, la surface présentant une structure avec des bosses ayant une hauteur et une densité de répartition déterminées.
